# EUROPEAN PATENT SPECIFICATION

(11) **EP 0 571 097 B1**
(45) Date of publication and mention of the grant of the patent: **13.11.1996**
(21) Application number: 93303425.8
(22) Date of filing: 30.04.1993
(51) Int. Cl.: B60N 2/46, B60N 2/48

(54) **Vehicle seats**
Fahrzeugsitze
Sièges de véhicule

(30) Priority: 22.05.1992 GB 9211014
(43) Date of publication of application: 24.11.1993
(73) Proprietor: JAGUAR CARS LIMITED, Allesley Coventry CV5 9DR (GB)
(72) Inventor: Thomas, Alan Vaughan, Shepshed, Leicestershire LE12 9DH (GB)
(74) Representative: Watts, Peter Graham

(56) References cited:
- WO-A-92/03306
- DE-A- 2 253 265
- DE-A- 4 225 880
- DE-C- 4 015 872
- PATENT ABSTRACTS OF JAPAN vol. 12, no. 437 (M-765)17 November 1988 & JP-A-63 170 140 ( MAZDA MOTOR CORP.)
- PATENT ABSTRACTS OF JAPAN vol. 11, no. 356 (M-644)20 November 1987 & JP-A-62 134 340 (NIPPON SOKEN )

## Description

The present invention relates to vehicle seats and in particular to the provision of headrests on vehicle seats which may be occupied by passengers sitting three abreast.

In conventional five seater saloon, hatchback or estate cars the rear seat is normally only fitted with two headrests. The reason for this is that while the rear seat is designed to accommodate up to three passengers, for the majority of time two or fewer passengers will be accommodated and under such circumstances, the provision of a third headrest would unnecessarily restrict the rearward view of the driver. However, when the third passenger is accommodated on the seat, a central headrest would contribute significantly to the safety and comfort of the third passenger.

DE-A-2 253 265 (corresponding to the preamble of claim 1) discloses a rear seat for a vehicle having a central headrest which is interconnected with a central armrest such that, when the armrest is raised the headrest extends upwardly from the upper edge of the seat back and when the armrest is lowered the headrest is pivoted forwardly to a lowered position.

JP-A-63170140 discloses a mechanism for moving a headrest vertically between a raised and lowered position, the headrest moving to its raised position on lowering of an armrest and to its lowered position on raising of the armrest.

According to the present invention, a seat adapted to accommodate three passengers comprises a seat cushion and a seat back, three headrests being located in juxtaposed relationship along an upper edge of the seat back and an armrest being provided centrally of the seat back, the armrest being selectively movable between a raised position in which it is flush with the seat back and a lowered position in which it divides the seat into two for occupation by two or fewer passengers, the armrest being interconnected to the central headrest such that when the armrest is in its lowered position, the central headrest is lowered and when the armrest is in its raised position the central headrest is raised, characterised in that the central headrest is moved linearly between the lowered position in which it is retracted into the seat back and its raised position in which it extends upwardly from the upper edge of the seat back, a seat belt being provided for the central passenger, an upper mounting for the seat belt being arranged to move with the central headrest.

In this manner, when two or fewer passengers occupy the seat the armrest may be lowered to retract the central headrest, so that obstruction of the rearward view is minimised, while the armrest may be raised to accommodate a third passenger, raising the headrest to provide restraint for the third passenger's head to guard against whiplash injuries to the neck in a rear impact or rebound in a front impact accident.

The invention is now described, by way of example only, with reference to the accompanying drawings, in which:-
Figure 1 is a perspective view of a seat formed in accordance with the present invention, with the armrest down;
Figure 2 is a perspective view of the seat illustrated in Figure 1, with the armrest up;
Figure 3 is a sectional elevation along the line III-III of Figure 1; and
Figure 4 is a sectional elevation similar to Figure 3, of an alternative embodiment of the invention.

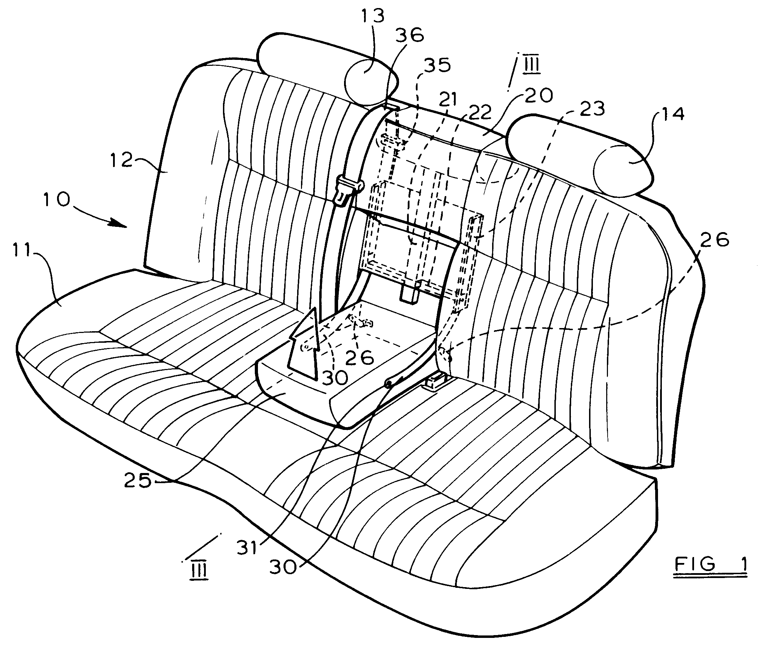

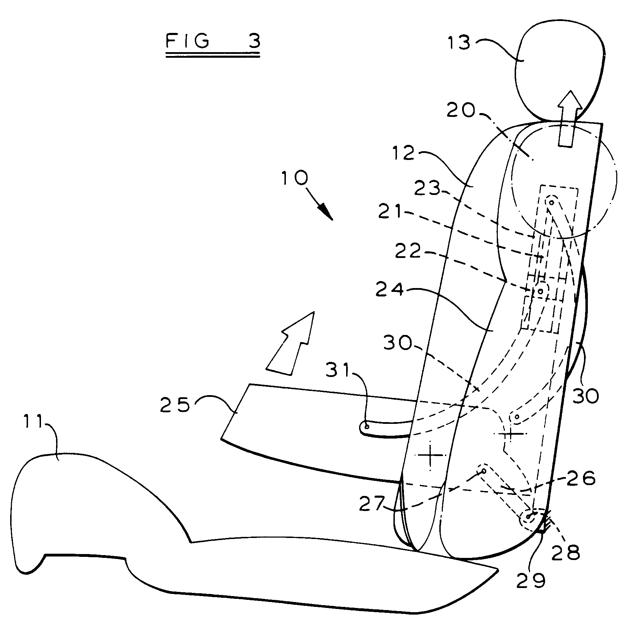

As illustrated in Figures 1 to 3, a rear seat 10 of a motor vehicle has a seat cushion 11 and a seat back 12. Headrests 13 and 14 are mounted on the upper edge 15 of the seat back 12 in conventional manner, the headrests 13 and 14 being located adjacent opposite ends of the seat back 12.

A central headrest 20 is located between headrests 13 and 14. The central headrest 20 is mounted on a stem 21, the stem 21 being attached to a carriage 22 which is slidingly located with respect to the seat back 12 on a pair of parallel guide rails 23. The guide rails 23 are located on either side of a recessed portion 24 of the seat back 12.

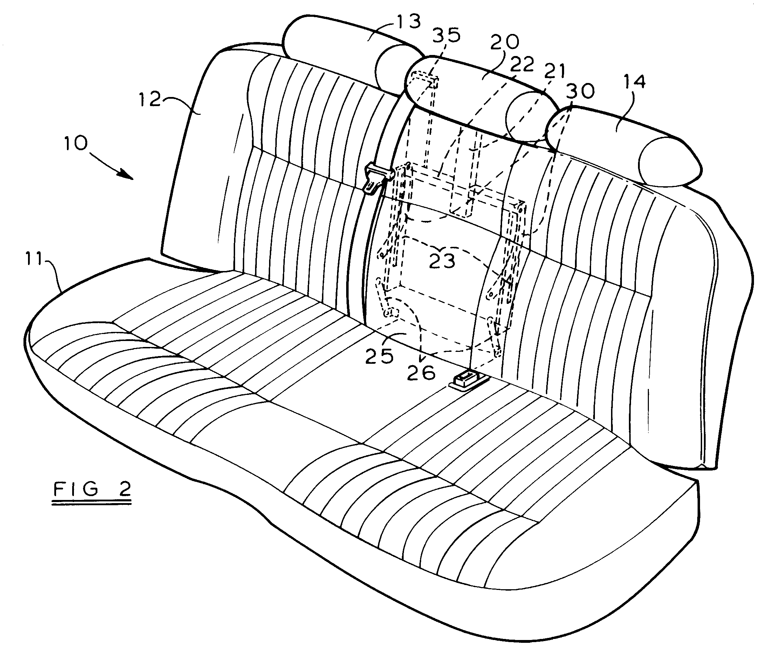

An armrest 25 is pivotally mounted in the recessed portion 24 of seat back 12, by means of a first pair of links 26. Each link 26 is attached at one end to a different side of the armrest 25, by means of pivot 27 and at the other end to a support bracket 29, by means of pivot 28. Each pair of pivots 27 and 28 are coaxial thereby permitting the armrest 25 to pivot between a lowered position in which it divides the seat into two (as illustrated in Figure 1) and a raised position in which the armrest 25 is flush with the seat back 12 (as illustrated in Figure 2). A pair of second links 30 are attached at one end, one to each side of the armrest 25 by means of pivot 31 and at the other end, to the corresponding end of the carriage 22. The pivot connections 31 are spaced forwardly of pivot connections 27 when the armrest 25 is in its lowered position and the link 30 is dimensioned so that; when the armrest is in its lowered position, the headrest 20 will be retracted fully into the seat back 12 (as illustrated in Figure 1); and when the armrest 25 is moved to its raised position, movement of the armrest 25 will be transmitted via links 30 to the carriage 22 to raise the headrest 20 to a position corresponding to that of headrests 13 and 14 (as illustrated in Figure 2).

As illustrated in Figures 1 to 3, an upper mounting 35 for seat belt 36 may also be mounted for movement with the carriage 22 so that the seat belt mounting 35 will move with the headrest 20 from a retracted position to a raised position, when the armrest 25 is moved from its lowered to its raised position.

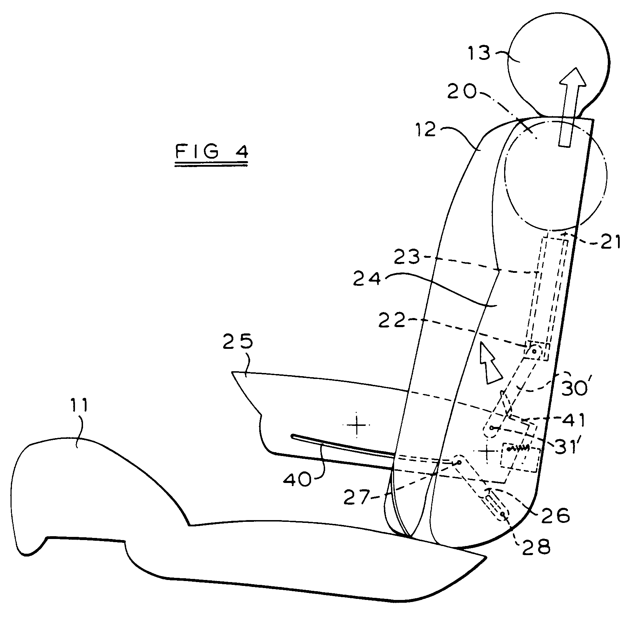

In the embodiment illustrated in Figure 4, the pivots 27 which attach links 26 to the armrest 25, engage in elongate slots 40. In this manner, the armrest 25 may be moved between its lowered and raised position by respectively raising or lowering the edge which is rearmost when in the lowered position. The armrest 25 is retained in its lowered position, by means of a spring loaded detent 41. In this embodiment, the links 30' are attached to the armrest 25 by means of pivots 31' located rearwardly of the pivots 27 when the armrest is in the lowered position, the other ends of links 30' being pivotally connected to the carriage 22. In this manner, as the rearward edge of armrest 25 is raised to move the armrest from its lowered to its raised position, the links 30' will cause the carriage 22 and headrest 20 attached thereto, to move upwardly to its raised position, while as the rearward edge of armrest 25 is lowered to move the armrest 25 to its lowered position, the links 30' will cause the carriage 22 and headrest 20 to move downwardly to its retracted position.

Various modifications may be made without departing from the invention. For example, while in the above embodiments, the upper mounting 35 for the seat belt 36 is attached to the carriage 22, a separate linkage may be provided for this purpose so that relative movement to the armrest 25 could be different from that of the headrest 20.

The whole assembly may be positively located in the raised position by a detent or interlock device which may possibly be actuated by the pressure of a passenger sitting in the central portion of the seat.

The positioning of the pivots relative to the centre of gravity of the armrest, and/or the other parts of the system may also be arranged so that any acceleration/deceleration motion of the car will tend to maintain the system in its set position. Alternatively, or in addition, over-centre toggling of the mechanism, detents, latches or other means may be provided to prevent unintentional movement of the components from either position.

Means may also be provided for adjusting the height of the central and/or outer headrests to suit the occupants of the seat. Furthermore, means may be provided for lowering the headrests independently of the armrest, for example when reverse gear is engaged, to improve rearward vision when reversing.

Means, for example, mechanical, electromechanical, pneumatic or hydraulic may be provided for assisting movement of the armrest and associated mechanism between its raised and lowered position.

Although the above embodiments have been described with reference to the rear seat of a motor vehicle, it will be appreciated that it can be applied to any seat arranged to accommodate up to three passengers.

## Claims

1. A seat (10) adapted to accommodate three passengers comprising a seat cushion (11) and a seat back (12), three headrests (13, 14, 20) being located in juxtaposed relationship along an upper edge (15) of the seat back (12) and an armrest (25) being provided centrally of the seat back (12), the armrest (25) being selectively movable between a raised position in which it is flush with the seat back (12) and a lowered position in which it divides the seat (10) into two for occupation by two or fewer passengers, the armrest (25) being interconnected to the central headrest (20) such that when the armrest (25) is in its lowered position, the central headrest (20) is lowered and when the armrest (25) is in its raised position the central headrest (20) is raised, characterised in that the central headrest is moved linearly between the lowered position in which it is retracted into the seat back and its raised position in which it extends upwardly from the upper edge of the seat back, a seat belt (36) being provided for the central passenger, an upper mounting (35) for the seat belt (36) being arranged to move with the central headrest (20).

2. A seat (10) according to Claim 1 characterised in that the central headrest (20) is mounted upon a carriage (22), guide means (23) being provided to guide movement of the carriage (22) relative to the seat back (12) and links (30; 30') being provided between the carriage (22) and the armrest (25) to transmit movement of the armrest (25) to the carriage (22).

3. A seat (10) according to Claim 2 characterised in that the armrest (25) is pivotally connected to the seat back (12) so that the armrest (25) may be moved from its lowered position to its raised position by upward movement of the front edge of the armrest (25), the link (30) between the armrest (25) and carriage (22) being pivotally connected to the armrest (25) at a position (31) spaced forwardly of the pivotal connection (27, 28) to the seat back (12) when the armrest (25) is in its lowered position, so that as the armrest (25) is moved from its lowered position to its raised position, the pivotal connection (31) between the armrest (25) and the link (30) connected to the carriage (22) will move above the pivotal connection (27, 28) of the armrest (25) to the seat back (12), thereby raising the carriage (22) and headrest (20) attached thereto.

4. A seat (10) according to Claim 1 or 2 characterised in that the armrest (25) is pivotally connected to the seat back (12), so that it may be moved from its lowered position to its raised position by moving the rearward edge of the armrest upwardly, the pivotal connection (27) between the armrest (25) and seat (10) engaging in an elongate slot (40) so that the armrest (25) may be moved relative to the pivotal connection (27), and the pivotal connection (31') between the armrest (25) and the link (30') connecting the armrest (25) to the carriage (22) being positioned rearwardly of the pivotal connection (27) between the armrest (25) and seat back (12).

5. A seat (10) according to any one of Claims 1 to 4 characterised in that the upper mounting (35) for a seat belt (36) is interconnected with the armrest (25) so that the mounting (35) will move from a retracted position when the armrest (25) is in its lowered position to a raised position when the armrest (25) is in its raised position.

6. A seat (10) according to any one of the preceding claims characterised in that means is provided to prevent unintentional movement of the components (20, 25, 35) from either their raised or lowered position.

7. A seat (10) according to any one of the preceding claims characterised in that means is provided for preventing lowering of the components (20, 25, 35) when the central portion of the seat (10) is occupied.

8. A seat (10) according to any one of the preceding claims characterised in that means is provided to assist movement of the armrest (25) and headrest (20) between their raised and lowered positions.

9. A seat (10) according to any one of the preceding claims characterised in that means is provided for adjusting the height of the central headrest (20) when the armrest (25) is in its raised position.

## Patentansprüche

1. Ein Sitz (10), der für die Aufnahme Von drei Fahrgästen angepaßt ist, umfassend ein Sitzpolster (11) und eine Sitzlehne (12), wobei drei Kopfstützen (13, 14, 20) entlang einer Oberkante (15) der Sitzlehne (12) nebeneinander angeordnet sind und eine Armlehne (25) in der Mitte der Sitzlehne (12) bereitgestellt ist, wobei die Armlehne (25) wahlweise zwischen einer aufgerichteten Stellung, in der sie bündig zur Sitzlehne (12) ist, und einer gesenkten Stellung bewegt werden kann, in der sie den Sitz (10) zur Unterbringung von zwei oder weniger Fahrgästen in zwei Teile teilt, wobei die Armlehne (25) mit der mittleren Kopfstütze (20) so verbunden ist, daß die mittlere Kopfstütze (20) versenkt ist, wenn sich die Armlehne (25) in ihrer gesenkten Stellung befindet, und die mittlere Kopfstütze (20) aufgerichtet ist, wenn sich die Armlehne (25) in ihrer aufgerichteten Stellung befindet, dadurch gekennzeichnet, daß sich die mittlere Kopfstütze geradlinig zwischen der gesenkten Stellung, in der sie in die Sitzlehne versenkt ist, und ihrer aufgerichteten Stellung, in der sie sich von der Oberkante der Sitzlehne aufwärts erstreckt, beweglich ist, wobei ein Sicherheitsgurt (36) für den mittleren Fahrgast bereitgestellt und eine obere Befestigung (35) für den Sicherheitsgurt (36) so angeordnet ist, daß sie sich mit der mittleren Kopfstütze (20) bewegt.

2. Ein Sitz (10) nach Anspruch 1, dadurch gekennzeichnet, daß die mittlere Kopfstütze (20) auf einem Schlitten (22) befestigt ist, wobei eine Führungsvorrichtung (23) bereitgestellt ist, um die Bewegung des Schlittens (22) bezüglich zur Sitzlehne (12) zu führen, sowie Verbindungen (30, 30') zwischen dem Schlitten (22) und der Armlehne (25), um die Bewegung der Armlehne (25) auf den Schlitten (22) zu übertragen.

3. Ein Sitz (10) nach Anspruch 2, dadurch gekennzeichnet, daß die Armlehne (25) drehbar mit der Sitzlehne (12) verbunden ist, so daß die Armlehne (25) durch Aufwartsbewegung der Vorderkante der Armlehne (25) aus ihrer gesenkten Stellung in ihre aufgerichtete Stellung bewegt werden kann, wobei die Verbindung (30) zwischen der Armlehne (25) und dem Schlitten (22) an einer Stelle (31), die sich in einem Abstand vor der drehbaren Verbindung (27, 28) mit der Sitzlehne (12) befindet, drehbar mit der Armlehne (25) verbunden ist, wenn sich die Armlehne (25) in ihrer gesenkten Stellung befindet, so daß sich bei Bewegung der Armlehne (25) aus ihrer gesenkten in ihre aufgerichtete Stellung die drehbare Verbindung (31) zwischen der Armlehne (25) und der Verbindung (30), die mit dem Schlitten (22) verbunden ist, über die drehbare Verbindung (27, 28) der Armlehne (25) mit der Sitzlehne (12) hinaus bewegt, wodurch der Schlitten (22) und die Kopfstütze (20), die daran befestigt ist, angehoben werden.

4. Ein Sitz (10) nach Anspruch 1 oder 2, dadurch gekennzeichnet, daß die Armlehne (25) schwenkbar mit der Sitzlehne (12) verbunden ist, so daß sie aus ihrer gesenkten in ihre aufgerichtete Stellung bewegt werden kann, indem die Hinterkante der Armlehne nach oben bewegt wird, wobei die drehbare Verbindung (27) zwischen der Armlehne (25) und dem Sitz (10) in einen länglichen Schlitz (40) eingreift, so daß die Armlehne (25) bezüglich zur drehbaren Verbindung (27) bewegt werden kann, und wobei sich die drehbare Verbindung (31') zwischen der Armlehne (25) und der Verbindung (30'), die die Armlehne (25) mit dem Schlitten (22) verbindet, hinter der drehbaren Verbindung (27) zwischen der Armlehne (25) und der Sitzlehne (12) befindet.

5. Ein Sitz (10) nach irgendeinem der Ansprüche 1 bis 4, dadurch gekennzeichnet, daß die obere Befestigung (35) für einen Sicherheitsgurt (36) mit der Armlehne (25) so verbunden ist, daß sich die Befestigung (35) aus einer versenkten Stellung, wenn sich die Armlehne (25) in ihrer gesenkten Stellung befindet, in eine angehobene Stellung, wenn die Armlehne (25) sich in ihrer aufgerichteten Stellung befindet, bewegt.

6. Ein Sitz (10) nach irgendeinem der vorstehenden Ansprüche, dadurch gekennzeichnet, daß eine Vorrichtung bereitgestellt ist, um eine unbeabsichtigte Bewegung der Komponenten (20, 25, 35) entweder aus ihrer aufgerichteten oder aus ihrer gesenkten Stellung zu verhindern.

7. Ein Sitz (10) nach irgendeinem der vorstehenden Ansprüche, dadurch gekennzeichnet, daß eine Vorrichtung bereitgestellt ist, um ein Absenken der Komponenten (20, 25, 35) zu verhindern, wenn der mittlere Bereich des Sitzes (10) besetzt ist.

8. Ein Sitz (10) nach irgendeinem der vorstehenden Ansprüche, dadurch gekennzeichnet, daß eine Vorrichtung bereitgestellt ist, um die Bewegung der Armlehne (25) und der Kopfstütze (20) zwischen deren aufgerichteter und deren gesenkter Stellung zu unterstützen.

9. Ein Sitz (10) nach irgendeinem der vorstehenden Ansprüche, dadurch gekennzeichnet, daß eine Vorrichtung bereitgestellt ist, um die Höhe der mittleren Kopfstütze (20) einzustellen, wenn sich die Armlehne (25) in ihrer aufgerichteten Stellung befindet.

## Revendications

1. Siège (10) destiné à recevoir trois passagers comprenant un coussin de siège (11) et un dossier de siège (12), trois repose-tête (13, 14, 20) étant placés de manière juxtaposée le long d'une arête supérieure (15) du dossier de siège (12) et un accoudoir (25) étant fourni au centre du dossier de siège (12), l'accoudoir (25) pouvant être déplacé de manière sélective entre une position relevée dans laquelle il est à niveau avec le dossier de siège (12) et une position abaissée dans laquelle il divise le siège (10) en deux pour recevoir deux ou un nombre inférieur de passagers, l'accoudoir (25) étant interconnecté avec le repose-tête central (20) de sorte que, lorsque le repose-tête (25) est dans sa position abaissée, le repose-tête central (20) est abaissé et lorsque l'accoudoir (25) est dans sa position relevée, le repose-tête central (20) est relevé, caractérisé en ce que le repose-tête central est déplacé de manière linéaire entre sa position abaissée dans laquelle il est rétracté dans le dossier de siège et sa position relevée dans laquelle il s'étend vers le haut depuis l'arête supérieure du dossier de siège, une ceinture de sécurité (36) étant fournie pour le passager central, une monture ou nature supérieure (35) pour la ceinture de sécurité (36) étant destinée à se déplacer avec le repose-tête central (20).

2. Siège (10) selon la revendication 1, caractérisé en ce que le repose-tête central (20) est monté sur un chariot (22), des moyens de guidage (23) étant fournis pour guider le mouvement du chariot (22) par rapport au dossier de siège (12) et des éléments de liaison (30, 30') étant fournis entre le chariot (22) et l'accoudoir (25) pour transmettre le mouvement de l'accoudoir (25) au chariot (22).

3. Siège (10) selon la revendication 2, caractérisé en ce que l'accoudoir (25) est relié de manière pivotante au dossier de siège (12), de sorte que l'accoudoir (25) peut être déplacé depuis sa position abaissée vers sa position relevée par un mouvement vers le haut de l'arête avant de l'accoudoir (25), l'élément de liaison (30) entre l'accoudoir (25) et le chariot (22) étant connecté de manière pivotante à l'accoudoir (25) en une position (31) espacée vers l'avant par rapport à la connexion pivotale (27, 28) au dossier de siège (12) lorsque l'accoudoir (25) est dans sa position abaissée de sorte que, lorsque l'accoudoir (25) est déplacé depuis sa position abaissée vers sa position relevée, la connexion pivotale (31) entre l'accoudoir (25) et l'élément de liaison (30) relié au chariot (22) se déplace au-dessus de la connexion pivotale (27, 28) de l'accoudoir (25) par rapport au dossier de siège (12), relevant de ce fait le chariot (22) et le repose-tête (20) fixé à celui-ci.

4. Siège (10) selon la revendication 1 ou 2, caractérisé en ce que l'accoudoir (25) est connecté de manière pivotante au dossier de siège (12), de sorte qu'il peut être déplacé depuis sa position abaissée vers sa position relevée en déplaçant l'arête arrière de l'accoudoir vers le haut, la connexion pivotale (27) entre l'accoudoir (25) et le siège (10) s'engageant dans une fente allongée (40) de sorte que l'accoudoir (25) peut être déplacé par rapport à la connexion pivotale (27), et la connexion pivotale (31') entre l'accoudoir (25) et l'élément de liaison (30') reliant l'accoudoir (25) au chariot (22) étant placée en arrière de la connexion pivotale (27) entre l'accoudoir (25) et le dossier de siège (12).

5. Siège (10) selon l'une des revendications 1 à 4, caractérisé en ce que la monture supérieure (25) pour la ceinture de sécurité (36) est interconnectée avec l'accoudoir (25), de sorte que la monture (35) se déplace depuis une position rétractée lorsque l'accoudoir (25) est dans sa position abaissée vers une position relevée lorsque l'accoudoir (25) est dans sa position relevée.

6. Siège (10) selon l'une des revendications précédentes, caractérisé en ce que des moyens sont fournis pour empêcher tout mouvement non intentionnel des composants (20, 25, 35) depuis leurs positions relevée ou abaissée.

7. Siège (10) selon l'une des revendications précédentes, caractérisé en ce que des moyens sont fournis pour empêcher l'abaissement des composants (20, 25, 35) lorsque la portion centrale du siège (10) est occupée.

8. Siège (10) selon l'une des revendications précédentes, caractérisé en ce que des moyens sont fournis pour aider le mouvement de l'accoudoir (25) et du repose-tête (20) entre leurs positions relevée et abaissée.

9. Siège (10) selon l'une des revendications précédentes, caractérisé en ce que des moyens sont fournis pour ajuster la hauteur du repose-tête central (20) lorsque l'accoudoir (25) est dans sa position relevée.
